# EUROPÄISCHE PATENTANMELDUNG

(11) **EP 0 806 716 A2**
(43) Veröffentlichungstag der Anmeldung: **12.11.1997**
(21) Anmeldenummer: 97111048.1
(22) Anmeldetag: 11.08.1993
(51) Int. Cl.: G05B 19/19, G05B 17/02, G05B 19/41

(54) **Verfahren zur Lageregelung**

(30) Priorität: 28.08.1992 DE 4228704; 28.08.1992 DE 4228705
(62) Teilanmeldung aus: 93112899.5
(71) Anmelder: SIEMENS AKTIENGESELLSCHAFT, 80333 München (DE)
(72) Erfinder: Schleicher, Siegfried, Dr., 91056 Erlangen (DE)

(57) **Zusammenfassung**

Bei einem lagegeregelten Antrieb werden automatisch Kennlinienabweichungen eliminiert. Dazu wird mittels eines Modells (IV) der zu erwartende Schleppabstand (SA*) bestimmt und mit dem Ist-Schleppabstand (SAᵢₛₜ) verglichen. Während jedes von einem Beobachter (ZB) detektierten nahezu stationären Geschwindigkeitszustands wird die Schleppabstandsdifferenz mit dem Kehrwert der Sollgeschwindigkeit (vₛₒₗₗ) bewichtet und über eine Integrationsstufe (I5,I6) vorzugsweise in einen Geschwindigkeitsvorsteuerpfad der Anordnung eingespeist.

## Beschreibung

Die Erfindung bezieht sich auf ein Verfahren zur Lageregelung eines von mindestens einem elektrischen Antrieb bewegbaren, mindestens einachsigen Systems, insbesondere einer Werkzeugmaschine oder eines Roboters, wobei die Lage jeder Achse durch Lagesollwerte für einen jeweils zugehörigen Lageregelkreis vorgegeben wird, wobei eine Geschwindigkeitsvorsteuerung vorgesehen ist und wobei für jede Achse durch Vergleich der Istlage und der Sollage der jeweilige Ist-Schleppabstand gebildet wird.

Ein Verfahren dieser Art ist aus der US-A-5 063 335 bekannt. Ferner ist in der US-A-4 808 899 die Maßnahme beschrieben, daß bei Erkennen stationärer Achsgeschwindigkeit das Übertragungsverhalten der zugehörigen Geschwindigkeitssteuerung geändert wird.

Bei handelsüblichen Werkzeugmaschinensteuerungen oder Robotersteuerungen wird die Lage der an der jeweiligen Bewegung beteiligten Achsen durch entsprechende Lagesollwerte und Geschwindigkeitssollwerte vorgegeben. Die resultierende Bahnbewegung wird dabei aus den einzelnen Achsbewegungen zusammengesetzt. Die resultierende Istbahnkurve soll dabei möglichst vollkommen mit der angestrebten Sollbahnkurve übereinstimmen. Bezüglich der Regelung der einzelnen Achsen können kleine Bahnfehler zum einen dadurch erreicht werden, daß mittels eines möglichst großen Geschwindigkeitsverstärkungsfaktors nur kleine Schleppabstände in den Lagereglern toleriert werden. Zum andern kann eine Reduzierung des Schleppabstandes auch mittels einer sogenannten Vorsteuerung erzielt werden. Dabei werden jeweils das achsbezogene Geschwindigkeits- und wenn möglich, auch das Beschleunigungssignal dem dem Lageregelkreis unterlagerten Regelkreis für Drehzahl- bzw. Beschleunigung als Vorsteuersollwert aufgeschaltet.

Beim Einsatz von Antrieben mit analogen Elementen im Steller/Umrichter und Tacho treten im Lageregelkreis Abweichungen des tatsächlichen Schleppabstandes gegenüber dem theoretischen Schleppabstand auf. Die Folge davon sind Bahnfehler, weil die zwei oder mehr an der jeweiligen Bahnbewegung beteiligten Achsen gegeneinander unterschiedliche und auch gegenseitige Abweichungen aufweisen. Diese fehlerhafte Übertragungscharakteristik resultiert im wesentlichen aus alterungs- und temperaturabhängigen Abweichungen der tatsächlichen Übertragungskennlinie zur theoretischen Übertragungskennlinie. Dabei handelt es sich zum einen um Nullpunkt- und zum anderen um Kennlinienverlaufsfehler.

Bisher konnten derartige Fehler nur durch manuelle Maßnahmen von Zeit zu Zeit korrigiert werden.

Aufgabe der Erfindung ist es, ein Verfahren der eingangs genannten Art so auszubilden, daß drift- und alterungsbedingte Abweichungen der Antriebssteuerkennlinie bezüglich des Kennlinienverlaufsfehlers automatisch eliminiert werden.

Gemäß der Erfindung wird die obengenannte Aufgabe dadurch gelöst, daß für jede Achse durch Vergleich der Istlage und der Sollage der jeweilige Ist-Schleppabstand gebildet wird, daß dieser mit einem in einem korrespondierenden Modell bestimmten Soll-Schleppabstand verglichen wird und daß die sich ergebende Schleppabstandsdifferenz ein mindestens mit dem Kehrwert der jeweiligen Sollgeschwindigkeit zu bewichtendes Anstiegs-Regelabweichunssignal bildet, das dann, wenn in einem Zustandsbeobachter eine, vorzugsweise innerhalb vorgegebener Grenzwerte stationäre Achsgeschwindigkeit detektiert wird, über eine Integrationsstufe steuernd auf die Geschwindigkeitsvorsteuerung einwirkt.

In diesem Zusammenhang ist eine erste vorteilhafte Ausbildung der Erfindung dadurch gekennzeichnet, daß das Ausgangssignal der Integrationsstufe additiv dem Signal des Geschwindigkeitsvorsteuerfaktors hinzugefügt wird. Ebenso kann das Ausgangssignal der Integrationsstufe auch herangezogen werden, in beliebiger Art den Geschwindigkeitsverstärkungsfaktor lagekorrigierend zu ändern. Auch kann das Ausgangssignal der Integrationsstufe benutzt werden, um einen Verstärkungsfaktor für das rückgeführte Istgeschwindigkeitssignal für die Lagekorrektur zu beeinflussen. Damit ergibt sich eine leichte Möglichkeit einer schaltungstechnischen Ausgestaltung.

Dadurch, daß die Integrationsstufe aus einem ersten und einem zweiten Integrationsglied besteht, die unterschiedliche Integrationskonstanten aufweisen, und daß je nach Bewegungsrichtung entweder das erste oder das zweite Integrationsglied über einen Bewegungsdiskriminator wirksamschaltbar ist, kann auch ein richtungsabhängiger Kennlinienverlaufsfehler leicht eliminiert werden.

Um zusätzlich den Einfluß von Nullpunktfehlern zu eliminieren, ist eine weitere Ausbildung der Erfindung dadurch gekennzeichnet, daß dann, wenn der Zustandsbeobachter einen stationären Achsbewegungszustand, vorzugsweise einen Achsstillstand, detektiert, die Schleppabstandsdifferenz ein mit dem Verstärkungsfaktor des Lageregelkreises zu bewichtendes Nullpunkt-Regelabweichungssignal bildet, das über ein Integrationsglied die Geschwindigkeitsvorsteuerung in ihrer Wirkung verändert.

Dieses Verfahren kann dabei so ausgebildet sein, daß das Ausgangssignal des Integrationsgliedes additiv dem Signal für die resultierende Geschwindigkeitsvorsteuerung hinzugeführt wird. Damit läßt sich das Verfahren schaltungstechnisch äußerst einfach realisieren.

Für einen stabilen Betrieb des Verfahrens erweist es sich ferner als vorteilhaft, daR jeweils bis zum Auftreten eines erneuten Achsstillstandes das zuletzt vorliegende Ausgangssignal des Integrationsgliedes erhalten bleibt und daß bis zum Auftreten eines erneuten stationären Geschwindigkeitszustandes das Ausgangssignal des zuletzt wirksamen Integrationsgliedes der Integrationsstufe ebenfalls erhalten bleibt.

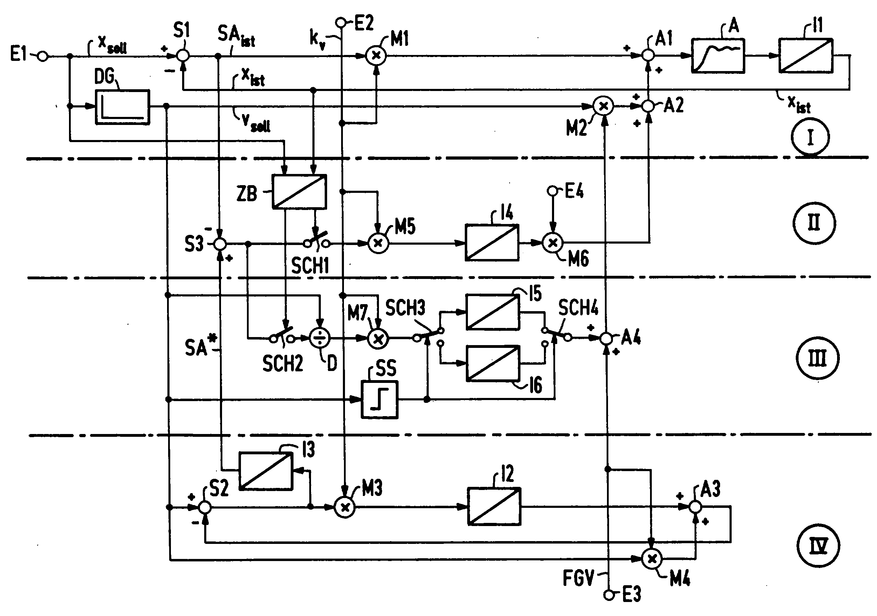

Ein Ausführungsbeispiel der Erfindung ist in der Zeichnung dargestellt und wird im folgenden näher erläutert.

In der Darstellung ist in Form eines Blockschaltbildes das erfindungsgemäße Verfahren dargestellt. Über einen Eingang E1 wird dabei jeweils ein Lagesollwert xₛₒₗₗ vorgegeben, gemäß dem ein Antrieb A bezüglich seiner Istlage xᵢₛₜ einzuregeln ist. Dem Antrieb A wird dabei eingangsseitig ein seine Geschwindigkeit bestimmendes Signal zugeleitet. Daraus ergibt sich gemäß einer Kennlinie des Antriebs eine tatsächliche Geschwindigkeit und über ein durch ein Integrierglied I1 angedeutetes Integralverhalten resultiert daraus die Istlage xᵢₛₜ. Diese wird mit der Sollage xₛₒₗₗ in einem Subtrahierglied S1 verglichen. Das Vergleichsergebnis ergibt sich als Ist-Schleppabstand SAᵢₛₜ. Dieser wird über einen Regler nach Art eines Multipliziergliedes M1 mit einem Verstärkungsfaktor kᵥ, der über einen Eingang E2 dem System einprägbar ist, geleitet und dann über ein Addierglied A1, auf dessen Funktion im folgenden noch eingegangen wird, dem Antrieb A geschwindigkeitsbestimmend zugeleitet.

Neben der durch die bislang beschriebenen Elemente vorgegebenen Lageregelung des Antriebs A erfolgt ferner noch eine Geschwindigkeitsvorsteuerung. Dies geschieht so, daß der jeweilige Lagesollwert xₛₒₗₗ einem Differenzierglied DG zugeleitet wird, an dessen Ausgang dann die Sollgeschwindigkeit vₛₒₗₗ ansteht. Diese wird einem Multiplizierglied M2 zugeleitet, dem ferner ein Geschwindigkeitsvorsteuerfaktor FGV über einen Eingang E3 zugeleitet wird. Der Geschwindigkeitsvorsteuerfaktor FGV kann dabei beispielsweise Werte zwischen 0 und 100 % aufweisen. Entsprechend der Wahl des Geschwindigkeitsvorsteuerfaktors FGV ergibt sich ein von der Sollgeschwindigkeit vₛₒₗₗ mehr oder weniger beeinflußtes Ausgangssignal des Multipliziergliedes M2, das additiv dem Addierglied A2 zugeleitet wird. Damit ist das Prinzip der Vorsteuerung, wie es aus dem handelsüblichen Stand der Technik bekannt ist, beschrieben.

Im Zweig für den Geschwindigkeitsvorsteuerfaktor FGV befindet sich jedoch noch ein Addierglied A4 und zwischen dem Multiplizierglied M2 und dem Addierglied A1 ist noch ein Addierglied A2 vorgesehen. Auf die Funktion der Addierglieder A2 und A4 wird im folgenden noch eingegangen, da diese für die Erfindung von wesentlicher Bedeutung sind.

Der eigentliche Lageregelkreis mit der eingreifenden Geschwindigkeitsvorsteuerung ist in der Darstellung mit I bezeichnet. Andere Funktionsblöcke, auf die noch eingegangen wird, sind mit II bis IV bezeichnet.

Beim Funktionsblock IV handelt es sich um ein Modell für die Antriebsanordnung. Das Integrierglied I2 entspricht dabei dem Antrieb. Das obengenannte Integrierglied I1 ist im Modell nicht vorgesehen, sondern die am Antrieb zu erwartende Geschwindigkeit wird einem Addierglied A3 zugeleitet, dem auch das Ausgangssignal eines Multiplizierglieds M4 zugeleitet wird, das eingangsseitig mit der Sollgeschwindigkeit vₛₒₗₗ und dem Geschwindigkeitsvorsteuerfaktor FGV beaufschlagt wird, wodurch der Effekt der Geschwindigkeitsvorsteuerung berücksichtigt wird. Die Rückführung des Ausgangssignals des Addiergliedes A3 auf ein Subtrahierglied S2, dem ferner die Sollgeschwindigkeit vₛₒₗₗ zugeleitet wird, führt dazu, daß am Ausgang des Subtrahiergliedes S2 ein Signal vorliegt, das die Veränderung des zu erwartenden Schleppabstandes, sozusagen eine "Schleppabstandsgeschwindigkeit" nachbildet. Über ein Integrierglied I3 wird daraus der vom Modell bestimmte, zu erwartende Schleppabstand SA* bestimmt. Dieser wird in einem Subtrahierglied S3 mit dem tatsächlich vorliegenden Schleppabstand SAᵢₛₜ verglichen.

Zum Ausregeln der fehlerbehafteten Bewegungen im Antrieb A, wenn dieser sich eigentlich im Stillstand befinden sollte (Nullpunktdrift), ist nun folgendes vorgesehen. Ein Zustandsbeobachter ZB wird eingangsseitig mit der Sollage xₛₒₗₗ und der Istlage xᵢₛₜ beaufschlagt. Aus der zeitlichen Veränderung dieser beiden Eingangsgrößen ist es im Zustandsbeobachter ZB dann leicht möglich, den Zustand festzustellen, bei dem ein Stillstand des Systems vorliegt. Dazu ist es erforderlich, daß sowohl eine signifikante Änderung der Werte für die Ist-Lage xᵢₛₜ als auch der Sollage xₛₒₗₗ vorliegt. Wenn eben dieser Zustand vom Zustandsbeobachter ZB erkannt worden ist, wird der Funktionsblock II wirksamgeschaltet. Es wird dann nämlich eine Schaltstufe SCH1 geschlossen und die zu diesem Zeitpunkt vorliegende Differenz zwischen dem tatsächlichen Schleppabstand SAᵢₛₜ und dem zu erwartenden Schleppabstand SA* wird einem Multiplizierglied M5 zugeleitet, dessen zweiter Eingang mit dem Verstärkungsfaktor kᵥ beaufschlagt ist. Das Ausgangssignal des Multipliziergliedes M5 gelangt an ein Integrierglied I4 und wird dann bedarfsweise mit einem weiteren Verstärkungsfaktor für die Regelkreisverstärkung korrigiert, wobei dieser Verstärkungsfaktor über einen Eingang E4 dem Multiplizierglied M6 zugeleitet wird. Das Ausgangssignal des Multipliziergliedes M6 gelangt dann an den zweiten Eingang des Addiergliedes A2. Demzufolge wird die fehlerhafte Lage des Systems durch eine Modifikation der Vorsteuerung eliminiert. Der Schalter SCH1 bleibt solange geschlossen, bis sich eine neue Sollgeschwindigkeit vₛₒₗₗ einstellt, die von Null verschieden ist. Dann wird nämlich der Schalter SCH1 wieder geöffnet. Das Ausgangssignal des Funktionsblockes II, d.h. entweder das Ausgangssignal des Integriergliedes I4 oder bei zusätzlicher Verwendung des Multipliziergliedes M6 dessen Ausgangssignal wird stets solange, beispielsweise mit einem Zwischenspeicher festgehalten, bis durch den Zustandsbeobachter ZB wieder das Vorliegen eines Achsstillstandes erkannt und dieser Regelkreis erneut geschlossen wird.

Der Funktionsblock III dient dazu, eine Kennlinienabweichung des Systems auszugleichen. Dies ist so zu verstehen, daß die jeweils die Geschwindigkeit des Antriebs bestimmende Eingangsgröße und die resultierende Ausgangssgeschwindigkeit des Antriebs um einen ungewollten Faktor gegeneinander versetzt sind. Es hat sich nun gezeigt, daß dieser Faktor je nach Laufrichtung durchaus verschieden sein kann. Es möge zunächst der Fall eines Rechtslaufs beachtet werden.

Die Laufrichtung wird durch eine Schwellwertstufe SS aus der Sollgeschwindigkeit vₛₒₗₗ detektiert. Bei Vorliegen eines Rechtslaufes werden die Schaltstufen SCH3 und SCH4 in die, in der Darstellung gezeigten Positionen gebracht. Der Zustandsbeobachter ZB überwacht nun fortlaufend, ob ein von der Geschwindigkeit "0" verschiedener stationärer Zustand für das Geschwindigkeitsverhalten des Systems vorliegt. Dies würde bedeuten, daß sowohl die Werte der Istlage xᵢₛₜ als auch der Sollage xₛₒₗₗ sich nahezu kontinuierlich bewegen. Wenn dies der Fall ist, Schwellwerte für diese Betrachtung können selbstverständlich dem Zustandsbeobachter ZB eingeprägt sein, wird die Schaltstufe SCH2 und damit die entsprechende Regelkreisschleife geschlossen. Das Ausgangssignal der Schaltstufe SCH2, d.h. die Differenz zwischen dem tatsächlichen Schleppabstand SAᵢₛₜ und dem zu erwartenden Schleppabstand SA* gelangt dann an den für den Dividenden vorgesehenen Eingang eines Dividiergliedes D. Diesem wird ferner die Sollgeschwindigkeit vₛₒₗₗ als ein dem Divisor entsprechendes Signal zugeleitet. Das Ausgangssignal des Dividiergliedes D führt über ein Multiplizierglied M7, dessen zweiter Eingang mit dem Verstärkungsfaktor kᵥ beaufschlagt ist, im Falle des Rechtslaufs an ein Integrierglied I5 und dessen Ausgangssignal wird wiederum über ein Addierglied A4 additiv dem Geschwindigkeitsvorsteuerfaktor FGV überlagert. Die Nachstellzeit des Integriergliedes I5 ist angepaßt für eine stabile Regelkreisschleife gewählt.

Sofern keine nahezu gleichförmige Geschwindigkeit vorliegt, was anhand des Beobachtens der Istlage xᵢₛₜ als auch der Sollage xₛₒₗₗ leicht möglich ist, wird der Schalter SCH1 und damit die Regelkreisschleife wieder geöffnet. Das zuletzt am Ausgang des Integriergliedes I5 vorliegende Signal wird dann in der Übersichtlichkeit halber nicht weiter dargestellter Weise gespeichert und bleibt additiv für den Geschwindigkeitsvorsteuerfaktor FGV im Addierglied A4 weiterhin wirksam.

Für den Fall des Linkslaufs, wird dieser von der Schwellwertstufe SS ebenfalls detektiert und die Schaltstufen S3 und S4 werden umgeschaltet, so daß dann ein Integrierglied I6 wirksam wird, das hinsichtlich seiner Integrations-Nachstellzeit der des Integriergliedes I5 bei Rechtslauf angepaßt ist. Auch hier wird ein Festhalten des Ausgangssignals des Integriergliedes I6 in gleicher Weise wie beim Integrierglied I5 vorgenommen. Die Gesamtheit von Integrierglied I5 und I6 kann als Integrierstufe bezeichnet sein.

## Patentansprüche

1. Verfahren zur Lageregelung eines von mindestens einem elektrischen Antrieb bewegbaren, mindestens einachsigen Systems, insbesondere einer Werkzeugmaschine oder eines Roboters, wobei die Lage jeder Achse durch Lagesollwerte für einen jeweils zugehörigen Lageregelkreis vorgegeben wird, wobei eine Geschwindigkeitsvorsteuerung vorgesehen ist und wobei für jede Achse durch Vergleich der Istlage (xᵢₛₜ) und der Sollage (xₛₒₗₗ) der jeweilige Ist-Schleppabstand (SAᵢₛₜ) gebildet wird, **dadurch gekennzeichnet,** daß dieser mit einem in einem korrespondierenden Modell (IV) des Antriebs (A) bestimmten Soll-Schleppabstand (SA*) verglichen wird und daß die sich ergebende Schleppabstandsdifferenz ein mindestens mit dem Kehrwert der jeweiligen Sollgeschwindigkeits (vₛₒₗₗ) zu bewichtendes Anstiegs-Regelabweichungssignal bildet, das dann, wenn in einem Zustandsbeobachter (ZB) eine, vorzugsweise innerhalb vorgegebener Grenzwerte stationäre Achsgeschwindigkeit detektiert wird, über eine Integrationsstufe (I5,I6) steuernd auf die Geschwindigkeitsvorsteuerung einwirkt.

2. Verfahren nach Anspruch 1, **dadurch gekennzeichnet,** daß das Ausgangssignal der Integrationsstufe (I5,I6) additiv dem Signal des Geschwindigkeitsvorsteuerfaktors (FGV) für die Geschwindigkeitsvorsteuerung hinzugefügt wird.

3. Verfahren nach Anspruch 1, **dadurch gekennzeichnet,** daß das Ausgangssignal der Integrationsstufe (I5,I6) den Geschwindigkeitsverstärkungsfaktor des Lageregelkreises ändert.

4. Verfahren nach Anspruch 1, **dadurch gekennzeichnet,** daß das Ausgangssignal der Integrationsstufe (I5,I6) einen Verstärkungsfaktor für das rückgeführte Istgeschwindigkeitssignal beeinflußt.

5. Verfahren nach einem der vorstehenden Ansprüche, **dadurch gekennzeichnet,** daß die Integrationsstufe aus einem ersten (I5) und einem zweiten Integrationsglied (I6) besteht, die unterschiedliche Integrationskonstanten aufweisen, und daß je nach Bewegungsrichtung entweder das erste (I5) oder das zweite Integrationsglied (I6) über einen Bewegungsdiskriminator (SS) wirksamschaltbar ist.

6. Verfahren nach einem der vorstehenden Ansprüche, **dadurch gekennzeichnet,** daß dann, wenn der Zustandsbeobachter (ZB) einen stationären Achsbewegungszustand, vorzugsweise einen Achsstillstand, detektiert, die Schleppabstandsdifferenz ein mit dem Verstärkungsfaktor (kᵥ) des Lageregelkreises zu bewichtendes Nullpunkt-Regelabweichungssignal bildet, das über ein Integrationsglied (I4) die Geschwindigkeitsvorsteuerung in ihrer Wirkung verändert.

7. Verfahren nach einem der vorstehenden Ansprüche, **dadurch gekennzeichnet,** daß jeweils bis zum Auftreten eines erneuten Achsstillstands das zuletzt vorliegende Ausgangssignal des Integrationsgliedes (I4) erhalten bleibt.

8. Verfahren nach einem der vorstehenden Ansprüche, **dadurch gekennzeichnet,** daß bis zum Auftreten eines erneuten stationären Geschwindigkeitszustandes das Ausgangssignal des zuletzt wirksamen Integrationsgliedes (I5 bzw. I6) der Integrationsstufe erhalten bleibt.
